# EUROPEAN PATENT APPLICATION

(11) **EP 2 690 893 A2**
(43) Date of publication of application: **29.01.2014**
(21) Application number: 11856101.8
(22) Date of filing: 12.10.2011
(51) Int. Cl.: H04W 4/00

(54) **METHOD OF GENERATING CALENDAR AND COMMUNICATION TERMINAL THEREOF**

(71) Applicant: Huawei Device Co., Ltd., Longgang District Shenzhen Guangdong 518129 (CN)
(72) Inventor: WEI, Fuyu, Shenzhen Guangdong 518129 (CN); DENG, Junjie, Shenzhen Guangdong 518129 (CN)
(74) Representative: Goddar, Heinz J.
(86) International application number: PCT/CN2011/080695
(87) International publication number: WO 2012/097612

(57) **Abstract**

The present invention relates to a schedule generation method, including: automatically acquiring schedule information according to a preset condition; and automatically generating a schedule record according to the acquired schedule information, and setting the schedule record into a corresponding idle schedule. Through the embodiment of the present invention, a user can arrange a schedule of the user more scientifically, reasonably, and flexibly, thereby facilitating schedule management of the user.

## Description

### TECHNICAL FIELD

The present invention relates to the field of communications technologies, and in particular, to a schedule generation method and a communication terminal for the schedule generation method.

### BACKGROUND

Communication terminals play an important role in modern life. With the acceleration of the pace of life, a schedule function (that is, a memorandum where a certain thing is to be completed at a certain time is set, and when the preset time arrives, a user is prompted to do the certain thing) on the communication terminal is increasingly used widely.

However, with the development of the modern society, due to heavy study or work loads, many people almost do not have much time and are reluctant to spend too much effort in arranging spare time life, such as sporting, shopping, and relaxations.

A user manually fills an existing schedule arrangement of a terminal according to an existing format in the terminal, and only after the user sets the schedule, the user is prompted according a time prompted by the user, and preset content is displayed to the user.

The prior art at least has the following disadvantages.

In the prior art, a user manually sets schedule arrangement. In one aspect, the user does not have much time to pay attention to spare time life, so schedule information that can be set is limited; in the other aspect, the user needs to spend a certain time in manually setting the schedule arrangement.

### SUMMARY

Embodiments of the present invention provide a schedule setting method for a communication terminal, a terminal, and a system thereof, which can automatically set a schedule according to a preset condition, thereby facilitating schedule arrangements of a user.

A schedule generation method includes:
automatically acquiring schedule information according to a preset condition; and
automatically generating a schedule record according to the acquired schedule information, and setting the schedule record into a corresponding idle schedule.

A communication terminal includes:
a schedule information acquisition unit, configured to automatically acquire schedule information according to a preset condition; and
a schedule record generation unit, configured to automatically generate a schedule record according to the acquired schedule information, and set the schedule record into a corresponding idle schedule.

It can be seen from the technical solutions provided by the present invention that, the technical solutions provided by the embodiments of the present invention can acquire schedule information according to a preset condition and automatically generate a schedule record, so that the user arranges a schedule of the user more scientifically, reasonably, and flexibly, thereby facilitating schedule management of the user.

### BRIEF DESCRIPTION OF DRAWINGS

To illustrate the technical solutions according to the embodiments of the present invention or in the prior art more clearly, the accompanying drawings required for describing the embodiments or the prior art are introduced briefly in the following. Apparently, the accompanying drawings in the following descriptions merely show some of the embodiments of the present invention, and persons of ordinary skill in the art can obtain other drawings according to the accompanying drawings without creative efforts.
FIG 1 is a first schematic flow chart of a schedule generation method according to an embodiment of the present invention;
FIG 2 is a second schematic flow chart of a schedule generation method according to an embodiment of the present invention; and
FIG. 3 is a schematic structural diagram of a communication terminal according to an embodiment of the present invention.

### DESCRIPTION OF EMBODIMENTS

The technical solutions of embodiments of the present invention will be clearly and completely described in the following with reference to the accompanying drawings in the embodiments of the present invention. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

The embodiments of the present invention are further described below in detail with reference to the accompanying drawings.

Firstly, it should be noted that, a communication terminal described in the embodiments of the present invention includes, but is not limited to, a wireless communication electronic device such as a mobile phone, a PDA (personal digital assistant), various smart phones, and a netbook, and a communication device such as a desktop computer. In the embodiments of the present invention, a mobile phone is taken as a specific example for illustration, which does not serve as a limit to the present invention.

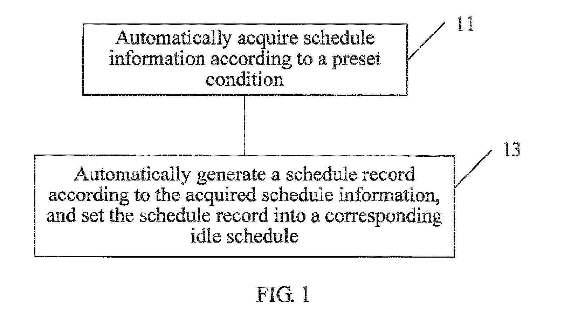

As shown in FIG. 1, a specific implementation process of a schedule generation method provided by an embodiment of the present invention may include the following steps:

Step 11: Automatically acquire schedule information according to a preset condition.

The preset condition may include a keyword set by a user according to a preference of the user, or a schedule keyword that the user prefers and is extracted by analyzing existing schedule arrangements, or a schedule keyword determined by a communication terminal by analyzing a behavior of using the communication terminal by the user, such as, information content browsed by the user in the network and a application that the user usually uses.

The described preset condition mainly includes a user preference keyword, and definitely, may also be another condition, for example, a specific time and place. For example, if a user of Shenzhen goes to Beijing on business and the user needs to arrange spare time during the business trip, a destination and duration of the business trip may be used as the preset condition. For another example, if a user wants to arrange an activity on a friend's birthday, the friend's birthday may be used as the preset condition.

The automatically acquiring the schedule information may include searching for schedule information through a network or extracting schedule information in locally stored information according to any one or more of the foregoing preset conditions, where the schedule information may include a group purchase or discount activity of a specific merchant of a shopping website, travel information of a travel website, dating information of a dating website, and the like. The foregoing websites on the Internet may be various special websites, for example, shopping websites, and may also be a dedicated server specially used to provide schedule arrangements. The dedicated server analyzes various information on various special websites to generate schedule information.

Step 13: Automatically generate a schedule record according to the acquired schedule information, and set the schedule record into a corresponding idle schedule.

After automatically acquiring the schedule information, the communication terminal invokes a schedule record module and automatically generates a schedule record according to a schedule record template. After generating the schedule record, the communication terminal queries whether a corresponding idle schedule exists in the terminal, and if the corresponding idle schedule exists, adds the schedule record into the idle schedule.

Optionally, in the embodiment of the present invention, if the communication terminal finds through the query that no corresponding idle schedule exists, the communication terminal may also prompt a user about the generated schedule record. The user determines whether to replace a current existing schedule record with the schedule record. If the replacement is required, the existing schedule record is replaced with the automatically generated schedule record. If the replacement is not required, the automatically generated schedule record is deleted.

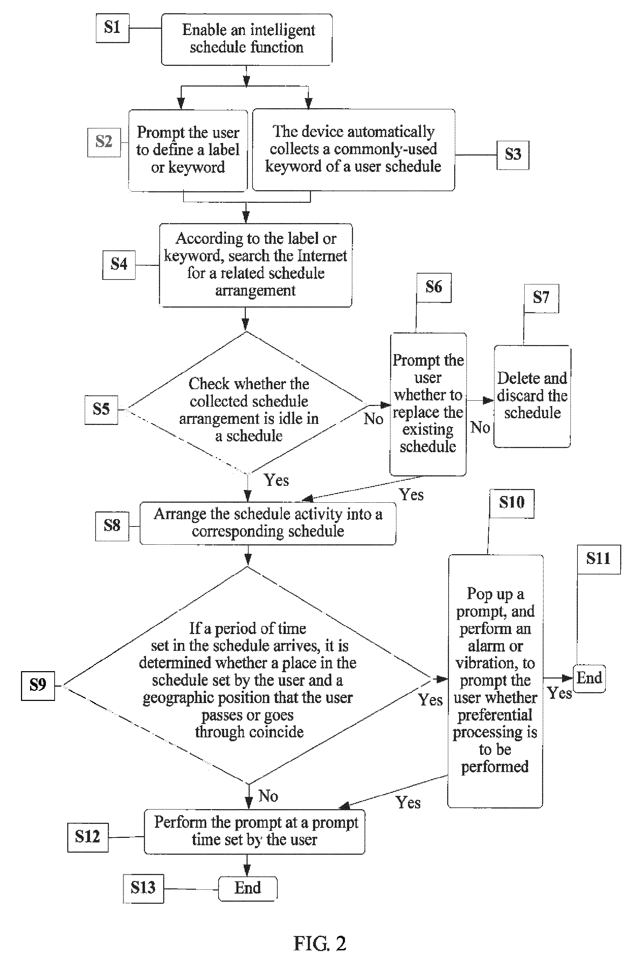

As shown in FIG. 2, a schedule generation method provided by an embodiment of the present invention is described in detail with reference to a specific preset condition. A specific implementation process of the method may include:

Step S 1: Enable an intelligent schedule function.

In the embodiment of the present invention, a communication terminal may set a menu in a schedule record module, and a user chooses whether to enable the intelligent schedule function. If the intelligent schedule function is enabled, step S2 is performed.

Step S2: Prompt the user to input or choose a preset hot keyword, or a label or keyword that the user prefers, and at the same time, perform step S3.

Step S3: The system automatically extracts a keyword according to a user arranged schedule and sets the keyword as a user preference label.

Step S4: According to the label set by the user and the collected keyword extracted from the user arranged schedule, search the Internet for an activity schedule arrangement that matches the label and the keyword.

Step S5: Check a calendar for an idle arrangement; if it is detected that an idle schedule exists, perform step S8; and otherwise, perform step S6.

Step S6: If the collected schedule conflicts with the user arranged schedule, prompt the user whether to replace the schedule. If the user chooses not to replace the schedule, step S7 is performed.

Step S7: Delete the schedule.

Step S8: Arrange the collected activity schedule into a corresponding idle schedule.

Step S9: In a period of time of the activity arrangement in the calendar, when the user passes or goes through a neighbor geographic position, perform step S10.

Step S10: Pop up a prompt to prompt, in a manner of an alarm or vibration, the user whether preferential processing needs to be performed immediately. If the processing is chosen, step S11 is performed; otherwise, step S12 is performed.

Step S11: The schedule prompt ends.

Step S12: If the user chooses to delay the processing, perform the prompt at a prompt time set in the prompt.

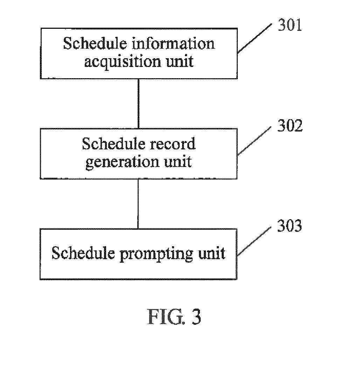

An embodiment of the present invention further provides a communication terminal. A specific implementation structure of the communication terminal is shown in FIG. 3 and may specifically include a schedule information acquisition unit 301 and a schedule record generation unit 302.

The schedule information acquisition unit 301 is configured to automatically acquire schedule information according to a preset condition.

Optionally, the corresponding information acquisition unit 301 may search the Internet for schedule information according to a keyword, where the schedule information may include a group purchase or discount activity of a specific merchant of a shopping website, travel information of a travel website, dating information of a dating website, and the like.

The schedule record generation unit 302 is configured to automatically generate a schedule record according to the acquired schedule information, and set the schedule record into a corresponding idle schedule.

Optionally, after the schedule information acquisition unit 301 automatically acquires the schedule information, the corresponding schedule information determination unit 302 invokes a schedule record module and automatically generates a schedule record according to a schedule record template. After generating the schedule record, it is queried whether a corresponding idle schedule exists, and if exists, the schedule record is added into the idle schedule.

Optionally, the communication terminal of the embodiment of the present invention further includes a schedule prompting unit 303.

The schedule prompting unit 303 is configured to automatically prompt the user of the schedule record when a preset prompt condition is satisfied.

Optionally, the preset condition may be specific time or position information. For example, a shopping schedule record preset by a user prompts the user at a certain department store, and when the user passes through the neighborhood of the certain department store, the user is automatically prompted about the schedule record, where a manner of a prompt about the schedule may be an alarm, vibration, or a voice broadcast.

The communication terminal in the embodiment of the present invention is described by taking a mobile phone as an example.

A mobile phone in the embodiment of the present invention includes a radio frequency unit, a central processing unit, a modem unit, and an input and output unit. The input and output unit may include a keyboard and a touchscreen, configured to receive a user operation or display a user operation result. For example, a user sets a keyword according to a preference of the user, uses the keyword as a condition for searching for schedule information, and inputs the keyword into the mobile phone through the touchscreen. The modem unit, for example, a MODEM module, of the mobile phone uses the keyword as a search condition, connects to the Internet through the radio frequency unit, and searches a related website on the Internet, to automatically acquire schedule information satisfying the condition. The central processing unit invokes a schedule record module, automatically generates a schedule record according to a schedule record template, and when the central processing unit determines that an idle schedule corresponding to the schedule record exists, adds the schedule record into the idle schedule. Optionally, the central processing unit of the mobile phone in this embodiment may be further configured to determine whether a preset prompt condition is satisfied, and if the prompt condition is satisfied, automatically prompt the user about the schedule record through an output unit, for example, a loudspeaker, of the mobile terminal.

Optionally, the central processing unit of the mobile terminal of the embodiment of the present invention may further include the following modules.

User-defined module: A user may define a preference and an interest point of the user, and commonly-used preference and interest point keywords in the Internet are set for the user to choose.

Information collection module: This module is divided into two parts. One part locally collects all schedule arrangements and activity arrangements of the user, extracts keywords and performs comparison to find which arrangement often occurs, and determines, according to a behavior of the user, an activity and arrangement that the user is interested in. The other part collects, according to a label defined by the user and a collected keyword extracted from the behavior of the user, a related activity arrangement or commercial activity, such as a movie, travel, and group purchase.

Information storage module: All user information is stored in this module, for example, behavior information of the user, and activity schedule arrangement information collected from the Internet.

Information analysis and processing module: All data in the information storage module is analyzed and compared with schedule arrangements of the user, and a suitable schedule arrangement of the user is recommended to the user by taking time as a coherence point, where workday and holiday arrangements are distinguished. An activity on the workday is arranged to be performed at night, and an activity on the holiday is arranged to be performed at a spare time of a whole day. The user may also manually choose, through the module, whether to accept the arrangement. Only if the arrangement is accepted, a function such as prompting can be set; otherwise, the arrangement can only be viewed on a schedule display interface.

Geographic position analysis module: The user may set whether to enable a geographic position recommendation function. If the function is enabled, a nearby activity may be recommended to an idle schedule arrangement of the user according to a place arrangement. For example, if there is a group purchase and discount activity at a place A and the group purchase activity is exactly a keyword label that the user likes, the group purchase and discount activity is recommended and displayed to the user preferentially. If the user moves near the place A, the user is preferentially prompted whether this arrangement is needed.

Schedule prompt enabling/disabling module: The user may set whether to enable an intelligent prompt function. If the user enables the function, the user is prompted according to setting of the user. If the user disables the prompt function, the user can know all schedule arrangements only during active browsing.

Each module of the central processing unit may be a segment of software codes or an application for executing a corresponding function. The software codes or application may be installed in the mobile phone through the central processing unit and invoked by the central processing unit to execute the corresponding function.

Persons of ordinary skill in the art should understand that, all or a part of processes in the method according to the embodiments may be accomplished by a computer program instructing relevant hardware. The program may be stored in a computer-readable storage medium. When the program is executed, the process of the method is performed. The storage medium may be a magnetic disk, an optical disk, a read-only memory (Read-Only Memory, ROM), or a random access memory (Random Access Memory, RAM).

The above descriptions are merely exemplary embodiments of the present invention, but the protection scope of the present invention is not limited thereto. Any variation or replacement easily thought of by persons skilled in the art without departing from the technical scope disclosed in the present invention should fall within the protection scope of the present invention. Therefore, the protection scope of the present invention should be subject to the protection scope of the claims.

## Claims

1. A schedule generation method, comprising:
automatically acquiring schedule information according to a preset condition; and
automatically generating a schedule record according to the acquired schedule information, and setting the schedule record into a corresponding idle schedule.

2. The method according to claim 1, wherein the preset condition comprises:
a user preference keyword and a specific time or place.

3. The method according to claim 1 or 2, wherein the automatically acquiring the schedule information comprises:
searching through a network for the schedule information, or extracting the schedule information in locally stored information.

4. The method according to claim 1, 2 or 3, wherein the automatically generating the schedule record according to the acquired schedule information comprises:
invoking a schedule record module, and automatically generating the schedule record according to a schedule record template.

5. The method according to claim 1, 2, 3 or 4, wherein the setting the schedule record into the corresponding idle schedule further comprises:
querying whether the corresponding idle schedule exists.

6. The method according to claim 1, 2, 3, 4 or 5, further comprising:
automatically prompting the user about the schedule record when a preset schedule record prompt condition is satisfied.

7. The method according to claim 6, wherein the preset schedule record prompt condition comprises: specific time or position information.

8. A communication terminal, comprising:
a schedule information acquisition unit, configured to automatically acquire schedule information according to a preset condition; and
a schedule record generation unit, configured to automatically generate a schedule record according to the acquired schedule information, and set the schedule record into a corresponding idle schedule.

9. The communication terminal according to claim 8, further comprising:
a schedule prompting unit, configured to automatically prompt the user of the schedule record to when a preset prompt condition is satisfied.

10. The communication terminal according to claim 8 or 9, further comprising:
a setting unit, configured to preset a condition for automatically acquiring the schedule information.

11. The communication terminal according to claim 8, 9 or 10, further comprising:
an information storage unit, configured to store the automatically acquired schedule information.

12. The communication terminal according to claim 8, 9, 10 or 11, further comprising:
a schedule prompt enabling/disabling unit, configured to set whether to start the schedule information acquisition unit to automatically acquire the schedule information.

13. The communication terminal according to claim 8, 9, 10, 11 or 12, wherein the communication terminal is a mobile phone.
